(19) 

(11) **EP 4 434 732 B1**

(12) **EUROPEAN PATENT SPECIFICATION**

(45) Date of publication and mention of the grant of the patent:
**12.08.2026 Bulletin 2026/33**

(21) Application number: **23164128.3**

(22) Date of filing: **24.03.2023**

(51) International Patent Classification (IPC):
***B29C 65/34*** *(2006.01)* ***B29C 65/00*** *(2006.01)*
***F16L 47/03*** *(2006.01)* ***B29C 65/50*** *(2006.01)*
*B29C 65/48 (2006.01)* *B29L 31/00 (2006.01)*

(52) Cooperative Patent Classification (CPC):
(C-Sets available)
**B29C 65/3428; B29C 65/3468; B29C 65/5057; B29C 66/0242; B29C 66/1122; B29C 66/116; B29C 66/5221; B29C 66/91441; F16L 47/03;**
B29C 65/4815; B29C 66/71; B29L 2031/24; B29L 2031/26 (Cont.)

(54) **INSTALLATION METHOD FOR A WELDING RING**

MONTAGEVERFAHREN FÜR EINEN SCHWEISSRING

PROCÉDÉ D’INSTALLATION D’UNE BAGUE DE SOUDAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**25.09.2024 Bulletin 2024/39**

(73) Proprietor: **Beweldo Oy**
**Karstula 43500 (FI)**

(72) Inventors:
- **SAARINEN, Timo**
  **43500 Karstula (FI)**
- **HELLSTÉN, Ari**
  **43500 Karstula (FI)**

(74) Representative: **Kolster Oy Ab**
**Salmisaarenaukio 1**
**P.O. Box 204**
**00181 Helsinki (FI)**

(56) References cited:
**DE-A1- 102013 018 434** **JP-A- 2001 141 164**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

**(Cont. next page)**

(52) Cooperative Patent Classification (CPC): (Cont.)

C-Sets
B29C 66/71, B29K 2023/06;
B29C 66/71, B29K 2023/12;
B29C 66/71, B29K 2027/06

## Description

### Technical field

The invention relates to an installation method for a welding ring onto a pipe.

### Background

Plastic pipes made materials such as polyethylene, polypropylene or PVC are commonly used as wastewater pipes in applications such as wastewater drainage in groundwater areas, at service stations and in industry applications, but also in internal building solutions as well as agricultural sludge and wastewater systems.

Methods for joining together such plastic pipes by welding in the area of the pipe coupling using a welding ring are known. In the methods, a welding ring is usually installed into a sealing ring groove of a first pipe replacing a sealing ring, whereafter the second pipe to be joined is installed. Then the welding ring is connected to an electric power source and a current is provided to the welding ring for a certain amount of time and a current runs through at least one resistance wire, resulting in heating of the welding ring as well as partial melting of the outer wall of the welding ring and surrounding areas of the pipe coupling. Hereby a tight bond of the pipes and the coupling is achieved.

Such as method for joining plastic pipes with the aid of a welding ring and a welding ring are disclosed in DE19781628 T1. The publication discloses a flexible welding ring. Further it discloses a method for joining plastic pipes where the flexible welding ring having a resistance coil is installed on the pipe surface or in a pipe sleeve and energy is supplied to the welding ring for melting the plastic material of the welding ring and achieving a bond with the plastic of the surrounding part in order to join together a first pipe and a second plastic pipe or plastic sleeve. It further discloses a pipe joint assembly having a welding ring.

A method for joining plastic pipes with the aid of a welding ring is also disclosed in DE102013018434 B of the applicant. A method for welding plastic pipes in the area of a pipe coupling using a welding ring is disclosed. In the method, the voltage applied to the welding ring and thus the heat supply is changed as a function of time. The welding process begins with a first low voltage/low heat input phase, which for the slotted welding ring is for the purpose of a better fit to the peripheral surface of the groove and for a closed welding ring for better attachment to the outer surfaces of the pipe coupling. This is followed by a second short phase in which a sudden, significantly higher voltage is applied and the voltage at least doubled for the pre-fixation of the welding ring in a groove. Then in a third phase with medium voltage the voltage is reduced at least by a sixth compared to the second phase the complete welding of the pipe coupling takes place.

JP 2001141164 A discloses a method for joining two plastic pipes to each other by applying heat to the joint of the pipes. Prior to joining the pipes together, straightening tools are used for straightening an end portion of one of the pipes. The end portion can be heated before using the straightening tools.

A problem in the prior art has been the installation of the welding ring into the sealing groove for pipes with the sealing groove on the outside of the pipe end. The material of welding rings is relatively rigid at ambient temperature. Therefore a closed welding ring is very difficult to install on the outside of a pipe ending, especially since the pipe has a slightly larger diameter at than end compared to the groove area.

To solve this problem a solution in the prior art has been to provide a welding ring that is shaped as an open loop prior to installation, as is mentioned for example in DE102013018434 B of the applicant. After setting of the welding ring into the sealing groove, the ends of the loop are joined together in order to close the loop.

However, an open loop welding ring that needs to be joined together during installation complicates the installation process and caution needs to be taken in order to ensure secure joining without gaps.

### Summary

**It** is aim of the invention to mitigate the problems of the solutions of the prior art. **It** is aim of the invention to provide an installation method for a welding ring suitable also for larger pipes for easy and secure installation of the welding onto the pipe.

This aim is achieved by the features of claim 1, particularly the features of the characterizing part.

According to a first embodiment the installation method comprises the steps:

- providing a first and a second pipe arranged to be joined together coaxially such that one end of the second pipe surrounds one end of the first pipe
- setting a welding ring having a body and at least one resistance wire wound around the body and being encased by a plastic sheath, into a sealing groove on the outside of the first pipe
- assembling one end of the second pipe onto the end of the first pipe equipped with the welding ring
- connecting the ends of the at least one resistance wire of the welding ring to an electrical power source in order provide

a current to heat the welding ring and achieve a material bond of the welding ring with the surrounding pipe walls.

According to the invention the welding ring is preheated prior to the step of setting of the welding ring into the sealing groove of the first pipe.

According to another embodiment the welding ring is preheated by connecting the ends of the at least one resistance wire of the welding ring to an electric power source and an electric current is led through the resistance wire of the welding ring for heating.

Advantageously the welding ring is preheated for 40-180s.

Further advantageously the welding ring is preheated such that the temperature of the welding ring after heating is 20-70°C more than the temperature of the ambient air.

Preferably the preheating voltage is based on the pipe diameter.

Advantageously the preheating voltage increases with increasing diameter of the pipes.

Further advantageously the preheating voltage increases substantially linearly with increasing diameter of the pipes.

According to another embodiment for a welding ring with one resistance wire and a single electric feed-in connection, a preheating voltage of 10-50 V is used for a diameter size of the welding ring of 300-1400 mm.

According to another embodiment for a welding ring with one resistance wire and two electric feed-in connections, a preheating voltage of 25-45 V is used for a diameter size of the welding ring of 1500-3300 mm. Advantageously, the welding ring diameter for this embodiment is 1500-2500 mm.

## Brief description of the drawings

Figure 1 shows a schematic view of a welding ring of type A with one feed-in connection

Figure 2 shows a schematic view of a welding ring of type B with one feed-in connection

Figure 3 shows a schematic top view of a first pipe and a welding ring during an installation method according to the invention during the preheating of the welding ring

Figure 4 shows a schematic top view of a first pipe and a welding ring during an installation method according to the invention after the welding ring has been preheated and set into a sealing grove on the outside of a first pipe

Figure 5 shows a schematic top view of a first pipe and a welding ring during an installation method according to the invention after the welding ring has been preheated and set into a sealing grove on the outside of a first pipe and after the ring has subsequently cooled down and shrank in diameter

## Detailed description

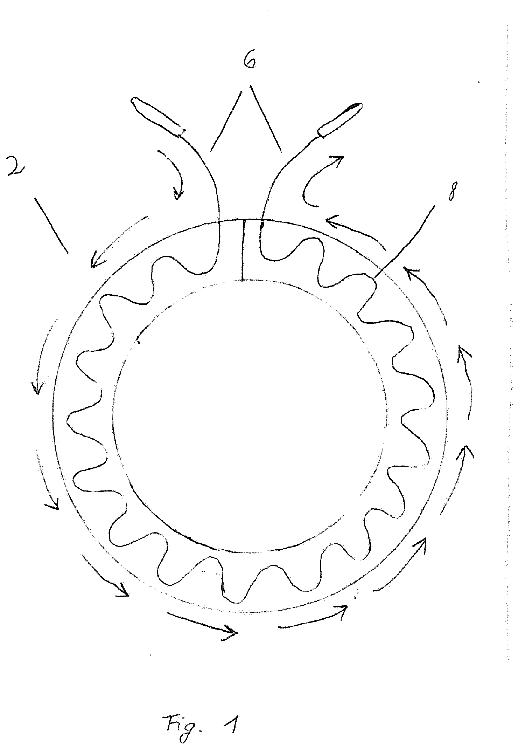

Figure 1 show shows a schematic view of a welding ring of type A with one feed-in connection. The welding ring 2 is of a known type that can be used with the method of the invention. Under a surrounding plastic sheet material (not depicted) the welding ring 2 has a resistance wire 8 wound around an inner plastic structure. The welding ring 2 has on one side a feed-in connection for the ends of the resistance wire 6 that are arranged to be connected to an electrical power source (not depicted). This welding ring structure and connection type is typically used for a welding ring up to a diameter of 1400 mm.

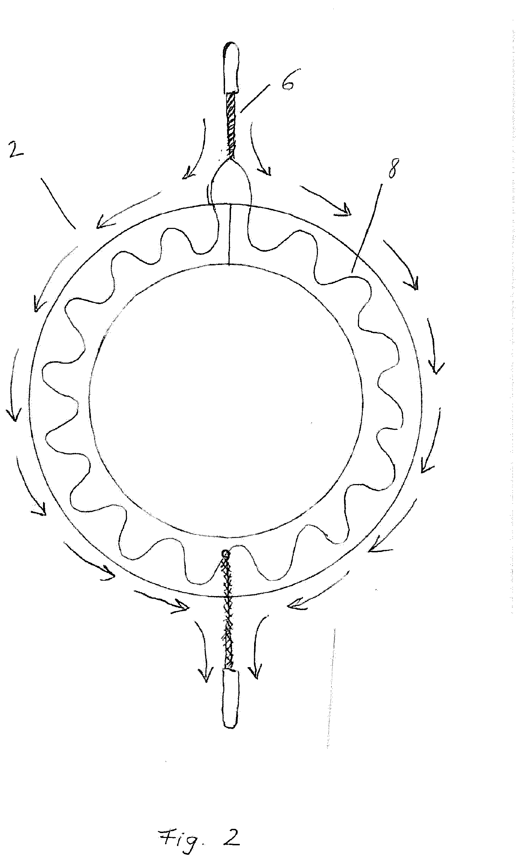

Figure 2 show shows a schematic view of a welding ring of type B with two feed-in connections. The welding ring 2 is of a known type that can be used with the method of the invention. Under a surrounding plastic sheet material (not depicted) the welding ring 2 has a resistance wire 8 wound around an inner plastic structure. The welding ring 2 has on one side a feed-in connection for the ends of the resistance wire 6 that are arranged to be connected to an electrical power source (not depicted) and on an opposite site additional wires are connected to the resistance wire 8 as an additional feed-in connection to enable connection to another electrical power source (not depicted). This welding ring structure and connection type is typically used for a welding ring having a diameter above 1400 mm.

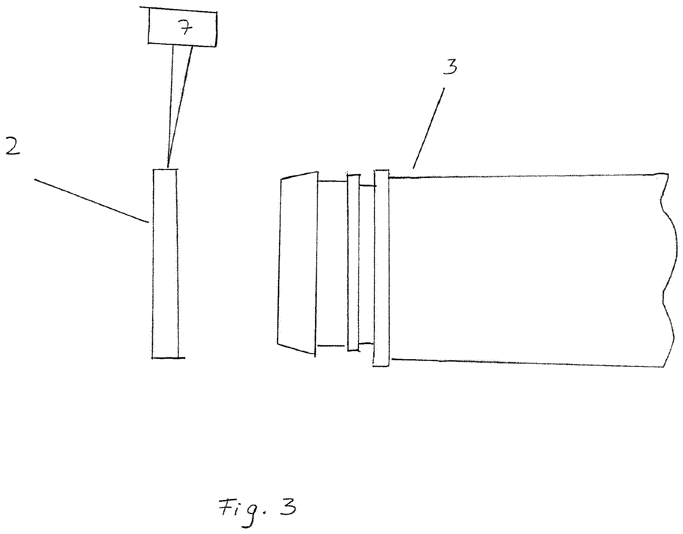

Figure 3 shows a schematic top view of a first pipe 3 and a welding ring 2 during an installation method according to the invention during the preheating of the welding ring before installation onto the first pipe. The welding ring is connected to an electric power source 7 by the ends of the resistance wire and voltage is applied. Due to the applied voltage, the resistance wire and thus the plastic materials of the welding ring are heated, causing the welding ring to

expand and increase in diameter. Due to the slightly increased diameter, the welding ring now is easier to install onto the first pipe.

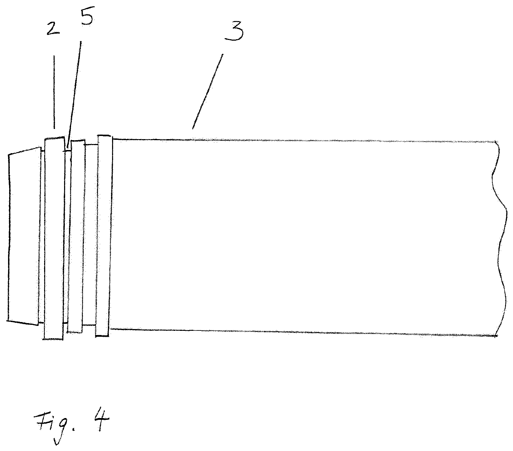

Figure 4 shows a schematic top view of a first pipe 3 and a welding ring 2 during an installation method according to the invention after the welding ring 2 has been preheated and set into a sealing groove 5 on the outside of a first pipe 3. The welding ring 2 still has an increased diameter due to the previous preheating process before it subsequently cools down to ambient temperature.

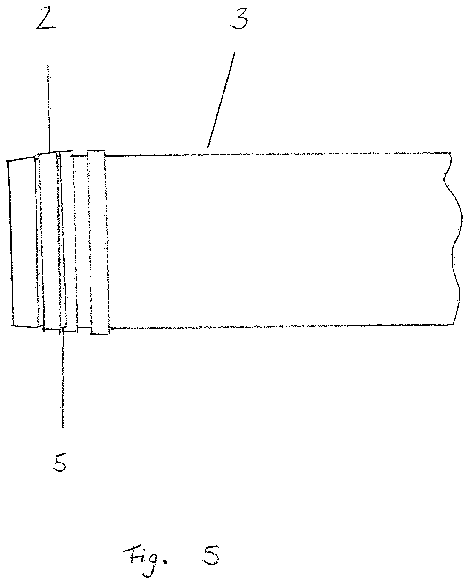

Figure 5 shows a schematic top view of a first pipe 3 and a welding ring 2 during an installation method according to the invention after the welding ring 2 has been preheated and set into a sealing grove 5 on the outside of a first pipe and after the welding ring 2 has subsequently cooled down and shrank back to its original diameter. The ring now fits relatively tight into the sealing groove.

Below in the table are presented optimum heating voltages and preheating times as well as end temperature of the welding after preheating for certain pipe diameters.

| Pipe type | Pipe diameter, ID mm | Preheating voltage, V | Preheating time, s | Temperature of welding ring after preheating, °C |
|---|---|---|---|---|
| Type A 1 feed-in | 300 | 11 | 40 - 180 | 20 - 70 degrees C more than ambient temperature |
| | 400 | 14 | | |
| | 500 | 18 | | |
| | 600 | 22 | | |
| | 700 | 25 | | |
| | 800 | 29 | | |
| | 900 | 32 | | |
| | 1000 | 36 | | |
| | 1100 | 40 | | |
| | 1200 | 43 | | |
| | 1300 | 47 | | |
| | 1400 | 50 | | |
| Type B 2 feed-ins | 1500 | 27 | | |
| | 1600 | 29 | | |
| | 1700 | 31 | | |
| | 1800 | 32 | | |
| | 1900 | 34 | | |
| | 2000 | 36 | | |
| | 2300 | 42 | | |

However, it needs to be understood that these present optimum values for preheating.

The necessary preheating voltage and preheating time depends besides the diameter of the pipe and the type of the welding ring also on the ambient temperature, that means the starting temperature, in which the preheating takes place.

A lower starting temperature will require a slightly longer preheating time, a higher starting temperature again a lower preheating time. Also a slightly lower or slightly higher voltage with a normal deviation will work for the preheating. It is common knowledge for a person skilled in the art that values used can vary within a normal deviation.

Also the material of the welding ring affects the process parameters, thus the required voltage and heating time. The values indicated in the table have been proven to achieve a good result with the welding rings of the applicant, which have a certain structure, material composition and wall thickness.

List of reference signs

2 welding ring
3 first pipe
5 sealing groove
6 ends of the at least one resistance wire
7 electrical power source
8 resistance wire

## Claims

**1.** Installation method for a welding ring (2), comprising the steps:

- providing a first (3) and a second pipe arranged to be joined together coaxially such that one end of the second pipe surrounds one end of the first pipe (3)
- setting a welding ring (2) having a body and at least one resistance wire wound around the body and being encased by a plastic sheath, into a sealing groove (5) on the outside of the first pipe (3)
- assembling one end of the second pipe onto the end of the first pipe (3) equipped with the welding ring (2)
- connecting the ends (6) of the at least one resistance wire of the welding ring (2) to an electrical power source (7) in order provide a current to heat the welding ring (2) and achieve a material bond of the welding ring (2) with the surrounding pipe walls,

**characterized in that** the welding ring (2) is preheated prior to the step of setting of the welding ring (2) into the sealing groove (5) of the first pipe (3).

**2.** Installation method according to claim 1 **characterized in that** the welding ring (2) is preheated by connecting the ends (6) of the at least one resistance wire of the welding ring (2) to an electric power source (7) and an electric current is led through the resistance wire of the welding ring (2) for heating.

**3.** Installation method according to claim 2, **characterized in that** the welding ring (2) is preheated for 40-180s.

**4.** Installation method according to claim 2 or 3, **characterized in that** the welding ring (2) is preheated such that the temperature of the welding ring (2) after heating is 20-70°C more than the temperature of the ambient air.

**5.** Installation method according to any one of claims 2-4, **characterized in that** the preheating voltage is based on the pipe diameter.

**6.** Installation method according to any one of claims 2-5, **characterized in that** the preheating voltage increases with increasing diameter of the pipes.

**7.** Installation method according to any one of claims 2-6, **characterized in that** the preheating voltage increases substantially linearly with increasing diameter of the pipes.

**8.** Installation method according to claim 7, **characterized in that** for a welding ring (2) with one resistance wire and a single electric feed-in connection, a preheating voltage of 10-50 V is used for a diameter size of the welding ring of 300-1400 mm.

9. Installation method according to claim 7, **characterized in that** for a welding ring (2) with two resistance wires and two electric feed-in connections, a preheating voltage of 25-45 V is used for a diameter size of the welding ring of 1500-3300 mm.

**Patentansprüche**

1. Montageverfahren für einen Schweißring (2), umfassend die Schritte:

   • Bereitstellen eines ersten (3) und eines zweiten Rohrs, die so angeordnet sind, dass sie koaxial zusammengefügt werden, so dass ein Ende des zweiten Rohrs ein Ende des ersten Rohrs (3) umgibt
   • Einsetzen eines Schweißrings (2), der einen Körper und mindestens einen um den Körper gewundenen Widerstandsdraht aufweist und von einer Kunststoffummantelung umgeben ist, in eine Dichtungsnut (5) an der Außenseite des ersten Rohrs (3)
   • Montieren eines Endes des zweiten Rohrs auf das mit dem Schweißring (2) versehene Ende des ersten Rohrs (3)
   • Anschließen der Enden (6) des mindestens einen Widerstandsdrahts des Schweißrings (2) an eine elektrische Stromquelle (7), um einen Strom bereitzustellen, um den Schweißring (2) zu erhitzen und eine Materialverbindung des Schweißrings (2) mit den umgebenden Rohrwänden zu erzielen,

   **dadurch gekennzeichnet, dass** der Schweißring (2) vor dem Schritt des Einsetzens des Schweißrings (2) in die Dichtungsnut (5) des ersten Rohrs (3) vorgewärmt wird.

2. Montageverfahren nach Anspruch 1, **dadurch gekennzeichnet, dass** der Schweißring (2) dadurch vorgewärmt wird, dass die Enden (6) des mindestens einen Widerstandsdrahts des Schweißrings (2) an eine elektrische Stromquelle (7) angeschlossen werden und ein elektrischer Strom zum Erwärmen durch den Widerstandsdraht des Schweißrings (2) geleitet wird.

3. Montageverfahren nach Anspruch 2, **dadurch gekennzeichnet, dass** der Schweißring (2) für 40-180s vorgewärmt wird.

4. Montageverfahren nach Anspruch 2 oder 3, **dadurch gekennzeichnet, dass** der Schweißring (2) so vorgewärmt wird, dass die Temperatur des Schweißrings (2) nach dem Erwärmen 20-70°C mehr als die Temperatur der Umgebungsluft beträgt.

5. Montageverfahren nach einem der Ansprüche 2-4, **dadurch gekennzeichnet, dass** die Vorwärmspannung auf dem Rohrdurchmesser basiert.

6. Montageverfahren nach einem der Ansprüche 2-5, **dadurch gekennzeichnet, dass** die Vorwärmspannung mit zunehmendem Durchmesser der Rohre zunimmt.

7. Montageverfahren nach einem der Ansprüche 2-6, **dadurch gekennzeichnet, dass** die Vorwärmspannung mit zunehmendem Durchmesser der Rohre im Wesentlichen linear zunimmt.

8. Montageverfahren nach Anspruch 7, **dadurch gekennzeichnet, dass** für einen Schweißring (2) mit einem Widerstandsdraht und einem einzelnen elektrischen Stromeinspeiseanschluss eine Vorwärmspannung von 10-50 V für eine Durchmessergröße des Schweißrings von 300-1400 mm verwendet wird.

9. Montageverfahren nach Anspruch 7, **dadurch gekennzeichnet, dass** für einen Schweißring (2) mit zwei Widerstandsdrähten und zwei elektrischen Stromeinspeiseanschlüssen eine Vorwärmspannung von 25-45 V für eine Durchmessergröße des Schweißrings von 1500-3300 mm verwendet wird.

**Revendications**

1. Procédé d’installation d’une bague de soudage (2), comprenant les étapes consistant à :

   • fournir un premier tube (3) et un deuxième tube agencés pour être joints ensemble coaxialement de telle sorte

qu'une extrémité du deuxième tube entoure une extrémité du premier tube (3)

• placer une bague de soudage (2) ayant un corps et au moins un fil résistif enroulé autour du corps et étant enveloppée par une gaine en plastique, dans une rainure d'étanchéité (5) sur l'extérieur du premier tube (3)

• assembler une extrémité du deuxième tube sur l'extrémité du premier tube (3) équipé de la bague de soudage (2)

• relier les extrémités (6) de l'au moins un fil résistif de la bague de soudage (2) à une source d'alimentation électrique (7) afin de fournir un courant pour chauffer la bague de soudage (2) et réaliser une liaison matière de la bague de soudage (2) avec les parois de tube environnantes,

**caractérisé en ce que** la bague de soudage (2) est préchauffée avant l'étape de placement de la bague de soudage (2) dans la rainure d'étanchéité (5) du premier tube (3).

**2.** Procédé d'installation selon la revendication 1 **caractérisé en ce que** la bague de soudage (2) est préchauffée en reliant les extrémités (6) de l'au moins un fil résistif de la bague de soudage (2) à une source d'alimentation électrique (7) et un courant électrique est conduit à travers le fil résistif de la bague de soudage (2) pour le chauffage.

**3.** Procédé d'installation selon la revendication 2, **caractérisé en ce que** la bague de soudage (2) est préchauffée pendant 40 à 180 s.

**4.** Procédé d'installation selon la revendication 2 ou la revendication 3, **caractérisé en ce que** la bague de soudage (2) est préchauffée de telle sorte que la température de la bague de soudage (2) après chauffage est supérieure de 20 à 70 °C à la température de l'air ambiant.

**5.** Procédé d'installation selon l'une quelconque des revendications 2 à 4, **caractérisé en ce que** la tension de préchauffage est basée sur le diamètre du tube.

**6.** Procédé d'installation selon l'une quelconque des revendications 2 à 5, **caractérisé en ce que** la tension de préchauffage augmente avec l'augmentation du diamètre des tubes.

**7.** Procédé d'installation selon l'une quelconque des revendications 2 à 6, **caractérisé en ce que** la tension de préchauffage augmente de manière sensiblement linéaire avec l'augmentation du diamètre des tubes.

**8.** Procédé d'installation selon la revendication 7, **caractérisé en ce que**, pour une bague de soudage (2) avec un fil résistif et un seul raccordement électrique d'alimentation, une tension de préchauffage de 10 à 50 V est utilisée pour une dimension de diamètre de la bague de soudage de 300 à 1400 mm.

**9.** Procédé d'installation selon la revendication 7, **caractérisé en ce que**, pour une bague de soudage (2) avec deux fils résistifs et deux raccordements électriques d'alimentation, une tension de préchauffage de 25 à 45 V est utilisée pour une dimension de diamètre de la bague de soudage de 1500 à 3300 mm.

6
2
8

Fig. 1

6
2
8

Fig. 2

7
3
2

Fig. 3

2
5
3

Fig. 4

2
3
5

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 19781628 T1
- DE 102013018434 B
- JP 2001141164 A